# EUROPEAN PATENT APPLICATION

(11) **EP 4 756 952 A1**
(43) Date of publication of application: **10.06.2026**
(21) Application number: 25220581.0
(22) Date of filing: 03.12.2025
(51) Int. Cl.: H01M 10/04, H01M 50/107, H01M 50/166, H01M 50/169

(54) **SECONDARY BATTERY AND METHOD FOR MANUFACTURING SECONDARY BATTERY**

(30) Priority: 04.12.2024 KR 20240178900
(71) Applicant: SK On Co., Ltd., Seoul 03161 (KR)
(72) Inventor: CHOI, Yang Kyu, 34124 Daejeon (KR); JU, Seung Hoon, 34124 Daejeon (KR)
(74) Representative: Stolmár & Partner Patentanwälte PartG mbB

(57) **Abstract**

A secondary battery according to various embodiments of the present disclosure includes: a battery can including a first curved part formed to be curved to have a first radius of curvature on an inner circumferential surface of a side wall; an electrode assembly accommodated inside the battery can; and a cover cap coupled to the side wall, wherein the cover cap includes a curved coupling part having a shape corresponding to at least a portion of the first curved part.

## Description

### [BACKGROUND OF THE INVENTION]

### 1. Field of the Invention

The present disclosure relates to a secondary battery and a method for manufacturing a secondary battery.

### 2. Description of the Related Art

Various types of secondary batteries are used as energy sources in electric vehicles or electronic devices. In the secondary batteries, a jelly-roll-type electrode assembly, in which an anode plate, a cathode plate and a separator are wound together, is used, or alternatively, an electrode assembly fabricated by stacking an anode plate, a cathode plate, and a separator in an appropriate order may be used.

This electrode assembly is accommodated in a battery housing and connected to an anode terminal and a cathode terminal. The housing is then sealed after being filled with an electrolyte.

### [SUMMARY OF THE INVENTION]

An object of the present disclosure is to provide a secondary battery and a method for manufacturing the secondary battery that facilitate welding between a battery can and a cap.

A secondary battery according to various embodiments of the present disclosure may include: a battery can including a first curved part formed to be curved to have a first radius of curvature on an inner circumferential surface of a side wall; an electrode assembly accommodated inside the battery can; and a cover cap coupled to the side wall, wherein the cover cap may include a curved coupling part having a shape corresponding to at least a portion of the first curved part.

In one embodiment, an upper surface of the side wall may include a flat part extending radially outward from the first curved part in a direction perpendicular to an axial direction.

In one embodiment, the first radius of curvature of the first curved part may be formed to be greater than or equal to a thickness of the side wall.

In one embodiment, an axial height of the first curved part may be formed to be greater than or equal to a thickness of the side wall.

In one embodiment, the first curved part may be formed to be convexly curved radially inward.

In one embodiment, the cover cap may include a body part having a plate shape and an edge part disposed along a circumference of the body part and coupled to the side wall, and the curved coupling part may be formed on one side of the edge part.

In one embodiment, the edge part may include a horizontal coupling part extending radially outward from the curved coupling part so as to face the flat part.

In one embodiment, the cover cap may be welded to the side wall at the horizontal coupling part.

In one embodiment, a coupling depth of the cover cap with respect to the battery can may be regulated by the horizontal coupling part.

In one embodiment, the edge part may include a concave part formed to be concave axially downward from the body part, and the curved coupling part may be formed on an outer surface of the concave part.

In one embodiment, at least a partial section of the body part may be formed to be concave axially downward relative to the edge part so as to be directly connected to the electrode assembly.

In one embodiment, at least a partial section of the body part may be formed to be convex axially upward relative to the edge part.

In one embodiment, the curved coupling part and the first curved part are fittingly engaged with each other such that a central axis of the cover cap may be arranged coaxially with a central axis of the battery can.

In one embodiment, the side wall may include a second curved part spaced apart from the first curved part and formed on one side of an outer circumferential surface thereof.

A method for manufacturing a secondary battery according to various embodiments of the present disclosure may include: a first processing step of processing a side wall defining an internal space of a battery can and a dummy plate extending radially outward from an upper end portion of the side wall; and a second processing step of removing the dummy plate from the battery can, wherein, in the first processing step, a first curved part may be formed to be curved to have a first radius of curvature on an inner circumferential surface of the side wall.

In one embodiment, in the second processing step, a flat part may be formed to extend radially outward from the first curved part in a direction perpendicular to an axial direction.

In one embodiment, the method may further include a cap coupling step of coupling a cover cap including a curved coupling part having a shape corresponding to the first curved part to the side wall, wherein, in the cap coupling step, the first curved part and the curved coupling part are fittingly engaged with each other such that a central axis of the cover cap may be arranged coaxially with a central axis of the battery can.

In one embodiment, the first radius of curvature of the first curved part may be formed to be greater than or equal to a thickness of the side wall.

In one embodiment, an axial height of the first curved part may be formed to be greater than or equal to a thickness of the side wall.

In the secondary battery according to various embodiments of the present disclosure, the curved coupling part of the cover cap and the side wall of the battery can having a first curved part may be fittingly engaged with each other, thereby ensuring central axis alignment between the battery can and the cover cap.

In the present disclosure, the first radius of curvature of the first curved part of the side wall is formed to be greater than or equal to the thickness of the side wall, thereby preventing a crack that may occur on the surface of the first curved part during formation of the first curved part on the side wall using a deep-drawing method.

In the present disclosure, a separate alignment process for ensuring alignment of the cover cap is unnecessary during welding of the cover cap to the battery can, thereby enabling improvement in manufacturing process efficiency.

In the present disclosure, once central-axis alignment between the cover cap and the battery can is achieved, a flat coupling part of the cover cap is seated on the flat part of the side wall to form a welding region, thereby enabling uniform welding at an accurate welding region.

### [BRIEF DESCRIPTION OF THE DRAWINGS]

The above and other objects, features and advantages of the present disclosure will be more clearly understood from the following detailed description taken in conjunction with the accompanying drawings, in which:
FIG. 1 is a cross-sectional view schematically illustrating a secondary battery according to an embodiment of the present disclosure;
FIG. 2 is a cross-sectional view schematically illustrating a coupling structure of a cover cap and a battery can according to an embodiment of the present disclosure;
FIG. 3 is a cross-sectional view schematically illustrating a coupling structure of the cover cap and the battery can according to another embodiment of the present disclosure;
FIG. 4 is an enlarged cross-sectional view of Portion A of FIG. 1 according to an embodiment of the present disclosure;
FIG. 5 is an enlarged cross-sectional view of Portion A of FIG. 1 according to another embodiment of the present disclosure;
FIG. 6 is an enlarged cross-sectional view of Portion A of FIG. 1 according to still another embodiment of the present disclosure;
FIG. 7 is a view schematically illustrating a manufacturing process of a secondary battery according to an embodiment of the present disclosure;
FIG. 8 is an enlarged view of Portion B of FIG. 7 illustrating the structure of a battery can depending on the radius of curvature of the first curved part in an embodiment of the present disclosure; and
FIG. 9 is a photograph showing a state in which a crack has occurred in the first curved part in FIG. 8(a);
FIG. 10 is a flowchart illustrating a method for manufacturing a secondary battery according to an embodiment of the present disclosure.

### [DETAILED DESCRIPTION OF THE INVENTION]

The embodiments of the present disclosure are provided to more fully describe the present disclosure to those skilled in the art to which the present invention pertains. The following embodiments may be modified in various forms, and the scope of the present disclosure is not limited to these embodiments.

Hereinafter, some embodiments of the present disclosure will be described through exemplary drawings for the convenience of description. When assigning reference numerals to components of the respective drawings, it should be noted that the same components will be denoted by the same reference numerals, even if they appear in different drawings.

The terms or words used in this specification and the claims should not be construed as being limited to their conventional or lexical meanings, and instead, in accordance with the principle that an inventor may define the concepts of terms or words in the most appropriate manner to describe the invention, they should be interpreted based on the meanings and concepts that meet the technical spirit of the present disclosure.

The terms used herein are provided to describe specific embodiments and are not intended to limit the present disclosure. As used herein, the singular form may include the plural form unless the context clearly dictates otherwise.

In addition, when used to describe and define the present disclosure, terms such as "comprise," "include," "consist of," and "have" should be interpreted in a non-exclusive manner. Unless explicitly stated otherwise, these terms should be construed to imply that the presence of the corresponding component, and not to exclude but rather include other components.

In addition, in describing components of the embodiment of the present disclosure, the terms such as first, second, A, B, (a), (b), and the like may be used. These terms are used to distinguish the component from other components and do not impose any limitations on their nature, sequence or order, etc.

It will be understood that when a component is described as being "connected" or "coupled" to another component, the component may be directly connected or coupled to the other component, but it may be "connected" or "coupled" to the other component with another component possibly interposed.

Space-related terms such as "beneath," "below," "lower," "above," and "upper" may be used to aid in the understanding of the relationship between an element or feature and another illustrated in the drawings. These space-related terms are provided to aid in the understanding of the present disclosure in various processing or usage states and are not intended to impose any limitations on the present disclosure. For example, if an element or feature in the drawing is turned upside down, the element or feature described as "beneath" or "below" becomes "above" or "upper." Accordingly, the term "beneath" is a relative concept that may encompass "upper" as well as "below" depending on orientation.

The embodiments described in this specification and the configurations illustrated in the drawings merely represent the most preferred embodiments of the present disclosure but do not encompass all aspects of the technical spirit of the present disclosure. Thus, it should be understood that various modifications and equivalents may be implemented at the time of filing the present application. In addition, the publicly known functions and configurations that are deemed unnecessary for clarifying the essence of the present invention will not be described.

A secondary battery 1 described in the present disclosure may be any type of conventional battery cell capable of converting the chemical energy of materials stored in the battery into electrical energy, and capable of supporting multiple charge/discharge cycles.

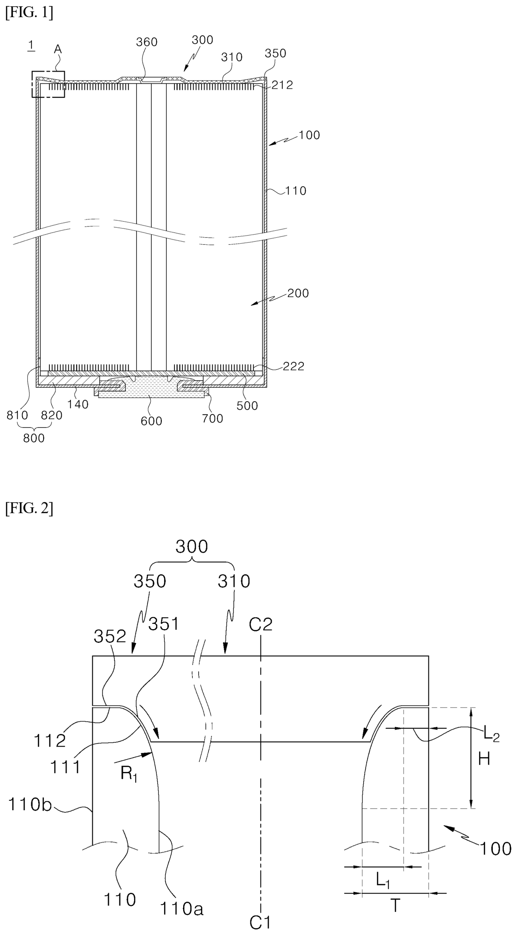

In describing various embodiments of the present disclosure, the axial direction may refer to a direction in which a central axis (e.g., C1 in FIG. 2) of a battery can 100 extends, and the radial direction may refer to a direction extending toward or away from the above-described central axis. In addition, since a jelly-roll-shaped electrode assembly 200 is arranged coaxially with the battery can 100, the axial direction may also refer to a direction parallel to the central axis along which the electrode assembly 200 is wound.

Hereinafter, a cylindrical secondary battery 1 according to various embodiments of the present disclosure will be described in detail with reference to the accompanying drawings.

FIG. 1 is a cross-sectional view schematically illustrating the secondary battery 1 according to an embodiment of the present disclosure.

Referring to FIG. 1, the secondary battery 1 according to various embodiments of the present disclosure may include the electrode assembly 200, the battery can 100, and a cover cap 300.

In addition, the secondary battery 1 may further include an electrode terminal 600, a terminal gasket 700, an insulator 800, and a current collector plate 500.

First, the electrode assembly 200 may include a first electrode (not shown), a second electrode (not shown), and a separator (not shown). The first electrode and the second electrode may include a current collector and a coating layer formed by coating an active material on the current collector, respectively.

The first electrode may be either a cathode or an anode. For example, the first electrode may be an anode. In one embodiment, the first electrode may include a first current collector (not shown) in the form of a metal foil and a first coating layer formed by coating an anode active material thereon. For example, the first current collector may be an anode current collector and may include copper or nickel.

In one embodiment, the first coating layer may be an electrically conductive coating layer serving as an anode coating layer. The first coating layer may include an anode active material. For example, the anode active material may include silicon materials (e.g., metallic silicon and silicon dioxide), carbon-based materials (e.g., graphite materials, graphene-containing materials, hard carbon, soft carbon, carbon nanotubes, porous carbon, conductive carbon), tin-based materials, or metal oxides, but is not limited thereto. Any anode active material known to those skilled in the art may be used.

The first current collector may include a first uncoated part 212 on which no first coating layer is formed. For example, the first uncoated part 212 may be an anode uncoated part and may function as an anode tab.

The first uncoated part 212 may be exposed to one side in the axial direction of the electrode assembly 200. For example, the first uncoated part 212 may protrude from the electrode assembly 200 toward the cover cap 300.

The first uncoated part 212 may be electrically connected to the cover cap 300, described below. For example, the first uncoated part 212 may be directly joined to the cover cap 300 by a method such as laser welding.

In the present disclosure, since it is not necessary to form a beading part on the battery can 100 when coupling the cover cap 300 to the battery can 100, the space efficiency inside the battery can 100 may be improved by directly coupling the first uncoated part 212 to the cover cap 300, thereby further increasing the energy density. However, it is not limited thereto, and the first uncoated part 212 may also be coupled to the cover cap 300 through a separate current collector plate.

The second electrode may be either a cathode or an anode. If the first electrode is an anode, the second electrode may be a cathode, and if the first electrode is a cathode, the second electrode may be an anode.

In some embodiment, the second electrode may be a cathode. The second electrode may include a second current collector (not shown) in the form of a metal foil and a second coating layer formed by coating a cathode active material thereon. For example, the second current collector may be a cathode current collector and may include aluminum.

In some embodiment, the second coating layer may be an electrically conductive coating serving as a cathode coating layer. The second coating layer may include a cathode active material. For example, the cathode active material may include lithium nickel manganese cobalt oxide (NMC), lithium manganese oxide (LMO), lithium iron phosphate (LFP), lithium cobalt oxide (LCO), lithium titanate (LTO), or a chalcogenide compound (such as LiTiS₂), but it is not limited thereto, and any cathode active material known to those skilled in the art may be used.

The second current collector may include a second uncoated part 222 on which no second coating layer is formed. For example, the second uncoated part 222 may be a cathode uncoated part and may serve as a cathode tab.

The second uncoated part 222 may be exposed to the other side in the axial direction of the electrode assembly 200, so as to be disposed opposite the first uncoated part 212. For example, the second uncoated part 222 may protrude from the electrode assembly 200 in a direction opposite the cover cap 300.

The second uncoated part 222 may be electrically connected to the electrode terminal 600 described below. In this case, the second uncoated part 222 may not be electrically connected to the battery can 100. For example, the second uncoated part 222 may be connected to the electrode terminal 600 through the current collector plate 500. However, it is not limited thereto, and the second uncoated part 222 may be directly connected to the electrode terminal 600 by a method such as welding.

The separator may be interposed between the first electrode and the second electrode to prevent the first electrode and the second electrode from being electrically connected to each other and causing a short circuit. For example, the separator may include an electrically insulating material. For example, the separator may include a polymeric material. For example, the separator may include polyethylene, polypropylene, or a combination thereof, but it is not limited thereto.

In the present disclosure, a tabless structure may be used in which the uncoated parts of the first electrode and the second electrode serve as electrode tabs without the need for separate electrode tabs, but is not limited thereto, and it is obvious that a structure in which separate electrode tabs are connected to the first electrode and the second electrode may also be employed.

The battery can 100 may have an opening formed at least one axial end thereof such that the electrode assembly 200 can be accommodated through the opening of the battery can 100. In this case, the upper end region of the side wall 110 defining the opening may be described as an open end part.

The battery can 100 have an internal space formed therein to accommodate the electrode assembly 200. In this case, as an example, an upper end of the battery can 100 is described as being open, but it is obvious that the opposite configuration may also be employed.

The battery can 100 may include a conductive metal material. The battery can 100 may be electrically connected to either the first electrode or the second electrode. For example, the battery can 100 may be electrically connected to the first electrode and may have the same polarity as the first electrode. However, it is not limited thereto, and the battery can 100 may be configured to be electrically insulated from the first electrode or the second electrode.

The shape of the battery can 100 may be determined to correspond to the specific shape of the electrode assembly 200. For example, the battery can 100 may be cylindrical or have a rectangular parallelepiped structure.

The battery can 100 may include the opening formed at an upper axial end, a lower wall 140 formed at an axial end opposite the opening, and a side wall 110 connecting the opening and the lower wall 140.

In one embodiment, an opening may be formed at an upper end portion of the side wall 110. For convenience of description, an axial upper end of the battery can 100 is described as being open, but this is merely an example, and an axial lower end of the battery can 100 may also be open.

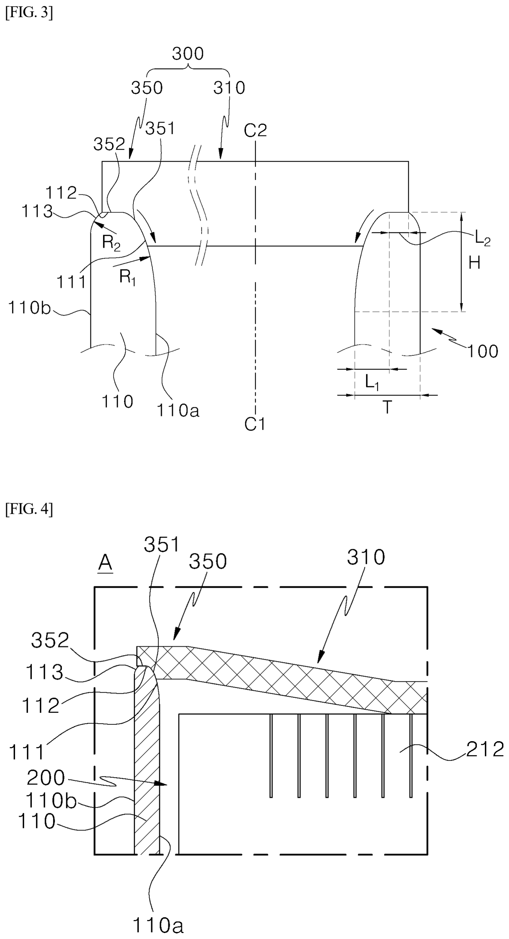

FIG. 2 is a cross-sectional view schematically illustrating a coupling structure between the cover cap 300 and the battery can 100 according to an embodiment of the present disclosure, and FIG. 3 is a cross-sectional view schematically illustrating a coupling structure between the cover cap 300 and the battery can 100 according to another embodiment of the present disclosure.

Referring to FIGS. 2 and 3, in one embodiment, a first curved part 111 may be formed at an upper end portion of the side wall 110 defining the opening of the battery can 100, with at least a partial section thereof being curved. At least a partial section of the first curved part 111 may be fittingly engaged with a curved coupling part 351 of the cover cap 300 described below.

The battery can 100 and the cover cap 300 of the secondary battery 1 may be coupled such that the first curved part 111 of the battery can 100 and the curved coupling part 351 of the cover cap 300 are fittingly engaged with each other.

For example, the first curved part 111 may be formed at an upper end portion of an inner circumferential surface 110a of the side wall 110. A section of the inner circumferential surface 110a of the side wall 110, excluding the section where the first curved part 111 is formed, may be formed parallel to the axial direction.

The first curved part 111 may be formed to be curved radially outward from the upper end of the inner circumferential surface 110a toward the axial upper direction.

For example, the first curved part 111 may be formed in a protruding curved shape directed toward the electrode assembly 200. The first curved part 111 may be formed to be convexly curved radially inward. Alternatively, the first curved part 111 may be formed in a protruding curved shape directed away from the electrode assembly 200. The first curved part 111 may be formed to be convexly curved radially outward.

The first curved part 111 may include at least a portion of a circular arc. The first curved part 111 may be formed to be curved to have a first radius of curvature R₁ on the inner circumferential surface 110a of the side wall 110.

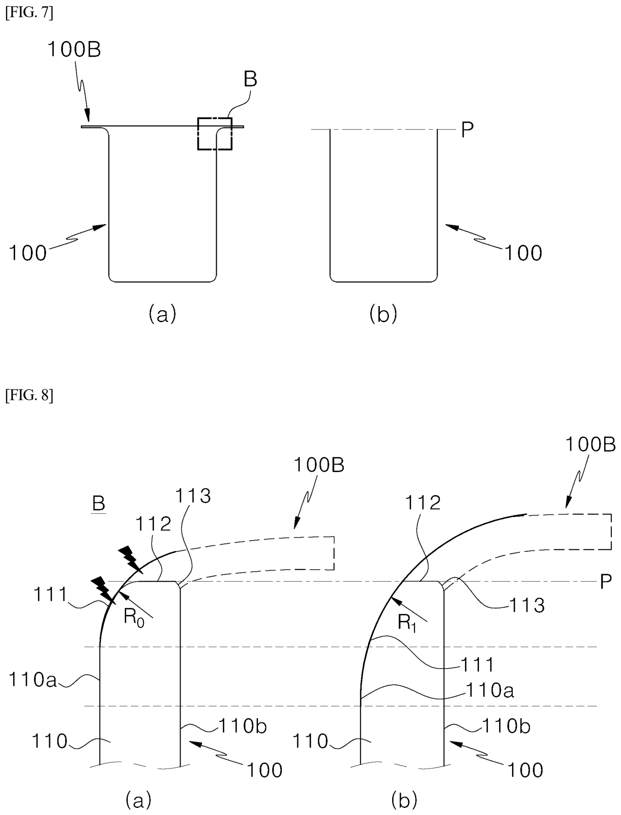

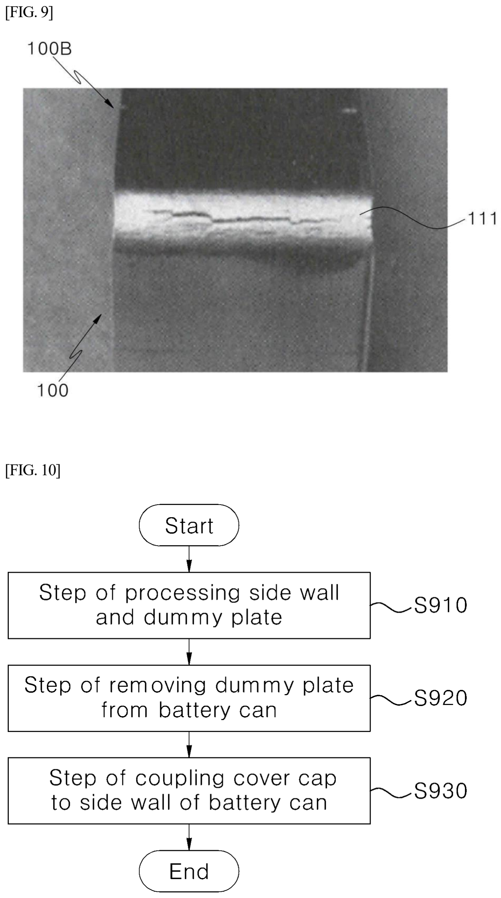

The first radius of curvature R₁ of the first curved part 111 may be formed to be greater than or equal to a thickness of the side wall 110. If the first radius of curvature R₁ of the first curved part 111 is smaller than the thickness of the side wall 110, excessive tensile force may act on the surface of the first curved part 111 during the first processing step described below, which may cause a crack (e.g., see FIGS. 8 and 9). In the present disclosure, since the first curved part 111 is formed at the upper end portion of the side wall 110 to be coupled with the cover cap 300, if a crack occurs in the first curved part 111, the coupling strength between the side wall 110 and the cover cap 300 may be reduced, thereby making it impossible to secure sufficient sealing strength of the battery can 100. In addition, when the secondary battery 1 is used, the relevant portion may become vulnerable, shortening the cycle life and increasing the risk of damage.

The upper limit of the first radius of curvature R₁ of the first curved part 111 is not limited. However, if the first radius of curvature R₁ is excessively large, it may approach a plane parallel to the axial direction. In this case, the area of the first curved part 111 may be reduced, making it difficult to secure a sufficient area of the curved part to guide the central-axis alignment with respect to the cover cap 300.

The first curved part 111 may be formed at a predetermined height in the axial direction from an upper surface of the side wall 110. Here, the axial height of the first curved part 111 may be referred to as a first height H.

In one embodiment, the axial first height H of the first curved part 111 may be formed to be greater than a thickness T of the side wall 110.

If the axial first height H of the first curved part 111 is formed to be less than or equal to the thickness T of the side wall 110, the length by which the curved coupling part 351 can be guided by the first curved part 111 becomes shorter during insertion of the cover cap 300 downward in the axial direction, and thus the possibility of the central-axis misalignment during coupling of the cover cap 300 to the side wall 110 may increase.

For example, the axial first height H of the first curved part 111 may be formed to be equal to or shorter than the length between an upper end of the side wall 110 and an upper end of the electrode assembly 200. For example, if the axial first height H of the first curved part 111 becomes excessively long, it may extend to the space into which the electrode assembly 200 is inserted, making it difficult to efficiently control the internal space of the battery can 100 during processing.

In addition, the first curved part 111 may be formed to a predetermined length in the radial direction from the inner circumferential surface 110a of the side wall 110 when viewed in an axial cross section. Here, the radial length of the first curved part 111 may be referred to as a first thickness L1.

For example, the first thickness L1 of the first curved part 111 may be formed to be equal to or greater than half the thickness of the side wall 110. If the first thickness L1 of the first curved part 111 is formed to be less than half the thickness of the side wall 110, it may be difficult for the first curved part 111 to secure a sufficient area to guide the central-axis alignment through the fitting engagement with the curved coupling part 351 of the cover cap 300.

The first curved part 111 of the present disclosure is formed to have the first radius of curvature R₁, thereby guiding the alignment of a central axis (e.g., C2 in FIG. 2) of the cover cap 300 with respect to the central axis (e.g., C1 in FIG. 2) of the battery can 100 when the cover cap 300 is coupled to the opening of the side wall 110.

For example, in the secondary battery 1, when the cover cap 300 is coupled to the opening formed by the side wall 110, the curved coupling part 351 of the cover cap 300 may slide along the surface of the first curved part 111 of the side wall 110. The curved coupling part 351 of the cover cap 300 may have a radius of curvature corresponding to the first radius of curvature R₁ of the first curved part 111 and may be formed in a corresponding shape.

In the secondary battery 1, the alignment of the central axis C2 of the cover cap 300 with respect to the central axis C1 of the battery can 100 may be achieved simply by fittingly engaging the curved coupling part 351 of the cover cap 300 with the first curved part 111 of the side wall 110. In the secondary battery 1, the first curved part 111 of the side wall 110 and the curved coupling part 351 of the cover cap 300 may be fittingly engaged with each other such that a central axis of the cover cap 300 may be arranged coaxially with a central axis of the battery can 100.

In one embodiment, a flat part 112 may be formed at the upper end portion of the side wall 110, extending radially outward from the first curved part 111 in a direction perpendicular to the axial direction.

The flat part 112 may form the upper surface of the side wall 110. The first curved part 111 and the second curved part 113 may be spaced apart from each other with respect to the flat part 112 at the upper end portion of the side wall 110. For example, the first curved part 111 may extend from a radially inner end of the flat part 112, and the second curved part 113 may extend from a radially outer end of the flat part 112.

The flat part 112 may have a radial length that allows surface contact with a horizontal coupling part 352 of the cover cap 300, thereby securing a sufficient welding area. For example, a radial length L2 of the flat part 112 may be formed to be equal to or less than half the thickness T of the side wall 110. If the radial length L2 of the flat part 112 becomes greater than half the thickness T of the side wall 110, the radial length (e.g., the first thickness L1) of the first curved part 111 may become relatively small, making it difficult to guide the axial alignment of the cover cap 300.

In various embodiments of the present disclosure, when the battery can 100 and the cover cap 300 are coupled, the flat part 112 of the side wall 110 may face the horizontal coupling part 352 of the cover cap 300. For example, at least a partial section of the flat part 112 of the side wall 110 may be in surface contact with the horizontal coupling part 352 of the cover cap 300.

The flat part 112 of the side wall 110 may form a welding region while in contact with the horizontal coupling part 352 of the cover cap 300. That is, the secondary battery 1 of the present disclosure may be welded in a state where the horizontal coupling part 352 of the cover cap 300 is in surface contact with the flat part 112 of the side wall 110.

For example, when the cover cap 300 and the battery can 100 are coupled by inserting at least a partial section of the cover cap 300 into the opening of the side wall 110, the horizontal coupling part 352 of the cover cap 300 may come into contact with the flat part 112 of the battery can 100, thereby limiting downward movement of the cover cap 300. A coupling depth of the cover cap 300 with respect to the battery can 100 may be regulated by the horizontal coupling part 352 coming into contact with the flat part 112 of the side wall 110.

In one embodiment, a second curved part 113 may be formed at an upper end portion of the side wall 110, with at least a partial section thereof being curved. For example, the second curved part 113 may be formed on one side of an outer circumferential surface 110b of the upper end portion of the side wall 110. The second curved part 113 may be formed to be curved radially inward as it extends upward.

For example, the second curved part 113 may be formed to be curved to have a second radius of curvature R₂. The second radius of curvature R₂ may be formed to be different from the first radius of curvature R₁ of the first curved part 111, but is not limited thereto.

The second curved part 113 may be disposed spaced apart from the first curved part 111. The first curved part 111 and the second curved part 113 may be disposed radially opposite to each other with respect to the flat part 112.

The axial height of the second curved part 113 may be formed to be different from the above-described first height H of the first curved part 111. For example, the axial height of the second curved part 113 may be formed to be smaller than the first height H.

In the present disclosure, since the second curved part 113 is formed on the outer circumferential surface 110b of the upper end portion of the side wall 110, a bead-receiving groove may be formed at the upper end portion of the side wall 110. The bead-receiving groove may accommodate a weld bead that may be generated when the edge part 350 of the cover cap 300 and the upper end portion of the side wall 110 are welded together. Therefore, in the present disclosure, a separate post-processing step for surface treatment of the welded portion of the cover cap 300 may be omitted.

The battery can 100 may include the lower wall 140 disposed below the electrode assembly 200 and extending from a lower end portion of the side wall 110. The electrode terminal 600 may be disposed on the lower wall 140 of the battery can 100. For example, a terminal hole may be formed in the lower wall 140 through which the electrode terminal 600 is inserted. The lower wall 140 may be electrically insulated from the second electrode of the electrode assembly 200.

Hereinafter, the structure of the secondary battery 1 on a lower side of the electrode assembly 200 will be described first.

The electrode terminal 600 may be disposed on the lower wall 140 of the battery can 100. For example, the electrode terminal 600 may be disposed by passing through the terminal hole formed in the lower wall 140 of the battery can 100.

The electrode terminal 600 may be electrically insulated from the lower wall 140 of the battery can 100. For example, in the present disclosure, the electrode terminal 600 may be electrically insulated from the lower wall 140 of the battery can 100 through the terminal gasket 700 disposed between the electrode terminal 600 and the lower wall 140. The electrode terminal 600 and the battery can 100 may have different polarities.

The electrode terminal 600 may be electrically connected to the second electrode. For example, the electrode terminal 600 may be a cathode terminal. For example, the electrode terminal 600 may be directly connected to the second electrode, or may be connected to the second electrode through the current collector plate 500.

In one embodiment, an upper end portion of the electrode terminal 600 may be connected to the current collector plate 500 through a hollow portion of the insulator 800, and a lower end portion of the electrode terminal 600 may be exposed to and fixed outside of the battery can 100.

FIG. 1 illustrates the electrode terminal 600 as having a rivet shape, but this is merely an example. The specific shape of the electrode terminal 600 is not limited thereto, and it is apparent that any known form of electrode terminal 600 may be applied.

The current collector plate 500 may be disposed adjacent to a lower portion of the electrode assembly 200 inside the battery can 100. The current collector plate 500 may be electrically connected to the second electrode to provide a pathway for electron migration. For example, the second electrode may be a cathode, and the current collector plate 500 may serve as a cathode current collector plate 500.

For example, the current collector plate 500 may be arranged so as to be electrically connected to an uncoated part of the second electrode. The current collector plate 500 may be connected by directly contacting the second uncoated part 222 of the second electrode, but is not limited thereto, and may also be connected through a separate conductive member.

The current collector plate 500 may be electrically connected to the electrode terminal 600. The current collector plate 500 may be electrically connected to the upper end portion of the electrode terminal 600 and the second electrode of the electrode assembly 200 to provide a pathway for electron migration.

The current collector plate 500 may be provided in a shape corresponding to a lower surface of the electrode assembly 200. For example, the current collector plate 500 may be a circular metal plate.

The current collector plate 500 may be disposed to be electrically insulated from the battery can 100, and the current collector plate 500 and the battery can 100 may have different polarities. The current collector plate 500 may be electrically insulated from the battery can 100 by the insulator 800.

The insulator 800 may be disposed to electrically insulate the electrode assembly 200 and/or the current collector plate 500 from the battery can 100. The secondary battery 1 may electrically insulate the current collector plate 500 from the battery can 100 by interposing the insulator 800 between the current collector plate 500 and the battery can 100.

In one embodiment, the insulator 800 may include an insulator body part 810 and an insulator wing part 820.

For example, the insulator body part 810 may be disposed between the current collector plate 500 and the lower wall 140 of the battery can 100, thereby preventing the current collector plate 500 from contacting the lower wall 140 or the side wall 110 of the battery can 100.

Alternatively, when the current collector plate 500 is omitted and the electrode terminal 600 and the second uncoated part 222 are directly connected, the insulator 800 may be disposed between the second electrode uncoated part of the electrode assembly 200 and the lower wall 140 of the battery can 100.

For example, the insulator body part 810 may have a hollow circular plate shape. The electrode terminal 600 may penetrate the insulator body part 810 through the hollow portion of the insulator body part 810 and be electrically connected to the current collector plate 500.

The insulator wing part 820 may be interposed between the electrode assembly 200 and the side wall 110. For example, the insulator wing part 820 may extend along the side wall 110 from a circumference of the insulator body part 810, which is disposed between the current collector plate 500 and the lower wall 140. The insulator wing part 820 may electrically insulate the electrode assembly 200 from the side wall 110.

In one embodiment, the insulator 800 may be omitted depending on the configuration of the electrode terminal 600.

Next, the structure of the secondary battery 1 on an upper side of the electrode assembly 200 will be described in detail.

The secondary battery 1 may be sealed by the cover cap 300 with the electrode assembly 200 inserted into the battery can 100.

The conventional battery can 100 includes a beaded part formed by recessing a partial section of the side wall 110 of the battery can 100 inward toward the center after the electrode assembly 200 is accommodated therein. In addition, conventionally, a method of mechanically sealing the battery can 100 was used by forming a crimping part. This was done by bending the open end part of the battery can 100 inward while the cover cap 300 was seated on the beading part, such that the open end part and the cover cap 300 came into close contact with each other.

However, the conventional secondary battery 1 has a problem in that the size of the electrode assembly 200 accommodated inside is limited due to the beading part and/or crimping part formed on the side wall 110, resulting in low space efficiency.

Meanwhile, to increase the energy density and space efficiency of secondary battery 1, a method of welding the cover cap 300 of secondary battery 1 to the battery can 100 has been used.

However, in this case, since the battery can 100 does not include a structure such as a beading part or crimping part for providing physical fixing force to the cover cap 300, it is difficult to accurately seat the cover cap 300 at the correct welding position relative to the battery can 100 prior to actual welding. Specifically, in the secondary battery 1 employing the conventional welding coupling method, it is difficult to align the central axis of the cover cap 300 with the central axis of the battery can 100 during the welding process.

The secondary battery 1 of the present disclosure proposes a coupling structure of the battery can 100 and the cover cap 300, which allows easy alignment of the cover cap 300 and the battery can 100 and ensures a precise welding position while employing a welding method, thereby enabling uniform welding.

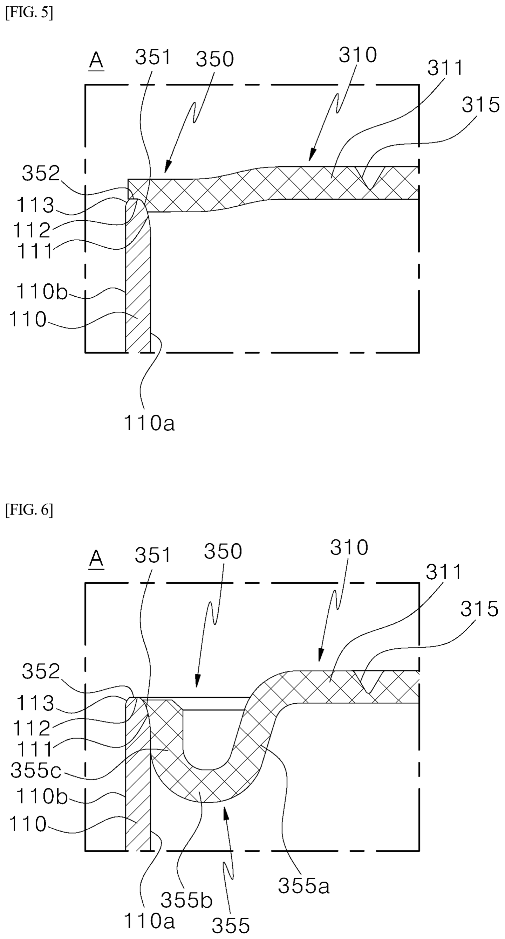

FIG. 4 is an enlarged cross-sectional view of Portion A of FIG. 1 according to an embodiment of the present disclosure, FIG. 5 is an enlarged cross-sectional view of Portion A of FIG. 1 according to another embodiment of the present disclosure, and FIG. 6 is an enlarged cross-sectional view of Portion A of FIG. 1 according to still another embodiment of the present disclosure;

The cover cap 300 according to an exemplary embodiment of the present disclosure will be described in detail with reference to FIGS. 4 to 6.

In the secondary battery 1 according to an embodiment of the present disclosure, the cover cap 300 may be coupled to the opening of the battery can 100.

The cover cap 300 may be coupled to the opening of the battery can 100 and may serve to seal the opening of the battery can 100. The cover cap 300 may be made of a conductive metal material.

The cover cap 300 may be electrically connected to the first electrode and may have the same polarity as the first electrode. For example, the first electrode may be an anode, and the cover cap 300 may serve as an anode terminal.

In addition, the cover cap 300 may be electrically connected to the battery can 100. The cover cap 300 may be electrically connected to the battery can 100 by being welded to the side wall 110 of the battery can 100 through an edge part 350 described below.

In one embodiment, the cover cap 300 may include a body part 310 disposed to cover the opening of the battery can 100, and the edge part 350 extending along a circumference of the body part 310 and being in contact with and coupled to the side wall 110. It should be understood that the body part 310 and the edge part 350 are not physically separate parts, but rather conceptually distinct components.

The body part 310 may be disposed to cover the opening of the battery can 100. The body part 310 may be disposed to have a shape corresponding to the shape of the opening. For example, the body part 310 may be provided in a circular plate shape.

In one embodiment, an electrolyte inlet may be formed on one side of the body part 310. The electrolyte inlet may be formed to penetrate the body part 310 in the axial direction. For example, the electrolyte inlet may be disposed at the center of the body part 310. For example, the electrolyte inlet may be arranged coaxially with the central axis of the cover cap 300.

In the secondary battery 1, the electrolyte may be injected while the cover cap 300 is welded to the battery can 100. After the electrolyte is injected, the electrolyte inlet may be sealed by a sealing member 360. For example, the sealing member 360 may be welded to the electrolyte inlet to seal it.

The body part 310 of the cover cap 300 may be electrically connected to the first uncoated part 212 of the first electrode. For example, the body part 310 may be directly connected to the first uncoated part 212. However, it is not limited thereto, and the body part 310 may be electrically connected to the first uncoated part 212 through a separate current collector member.

Referring to FIG. 4, in one embodiment, a lower surface of the body part 310 may be directly contacted and coupled to the first uncoated part 212. For example, the body part 310 may be formed to be concave axially downward relative to the edge part 350 in at least a portion thereof. The lower surface of the body part 310 may be disposed below a lower surface of the edge part 350. The secondary battery 1 may be configured such that the body part 310 of the cover cap 300 is directly contacted with the first uncoated part 212 of the electrode assembly 200, thereby improving space efficiency inside the battery can 100.

Referring to FIG. 5, in one embodiment, the body part 310 may be formed to be convex axially upward relative to the edge part 350 in at least a partial section thereof. For example, the body part 310 may include at least one protruding part 311. The protruding part 311 may be disposed to protrude axially upward from one side of the body part 310. A lower surface of the protruding part 311 may be disposed above the lower surface of the edge part 350. The secondary battery 1 of the present disclosure may easily make contact with an external component (e.g., a bus bar, not shown) through the protruding part 311 and provide a pathway for electron migration. In this case, the body part 310 may be connected to the first uncoated part 212 through a separate current collecting member.

In one embodiment, at least one notch portion 315 may be disposed on one side of the body part 310 to facilitate fracture when the internal pressure of the battery can 100 increases. For example, the notch portion 315 may be provided in the form of a groove formed to be concave to a predetermined depth on at least one of the upper or lower surfaces of the body part 310. For example, the notch portion 315 may be formed on the protruding part 311, but is not limited thereto.

The edge part 350 may extend from the circumference of the body part 310. The edge part 350 may be formed around the circumference of the body part 310 and coupled to the side wall 110 of the battery can 100.

In one embodiment, the curved coupling part 351 may be formed on one side of the edge part 350 to be fittingly engaged with the first curved part 111 of the side wall 110. The curved coupling part 351 may be formed along the periphery of the edge part 350. The curved coupling part 351 may be formed to have a radius of curvature corresponding to that of the first curved part 111 when viewed in a vertical cross-section of the secondary battery 1. The curved coupling part 351 may have a shape corresponding to that of the first curved part 111. In the present disclosure, the curved coupling part 351 of the edge part 350 may be fittingly engaged with the first curved part 111 of the side wall 110, thereby aligning the central axis of the cover cap 300 with the central axis of the battery can 100.

Meanwhile, referring to FIG. 6, in one embodiment, the edge part 350 may include a concave part 355 formed to be concave axially downward around the circumference of the body part 310. For example, the concave part 355 may include a first concave wall part 355a extending axially downward around the circumference of the body part 310, a second concave wall part 355b extending radially outward from a lower end of the first concave wall part 355a, and a third concave wall part 355c extending axially upward from an outer end of the second concave wall part 355b.

At this time, the third concave wall part 355c of the concave part 355 may be disposed adjacent the side wall 110, and the cover cap 300 may be seated on the side wall 110 through the third concave wall part 355c of the concave part 355. The third concave wall part 355c may be arranged parallel to the side wall 110. The third concave wall part 355c may contact the inner circumferential surface 110a of the side wall 110.

For example, the curved coupling part 351 may be formed on an outer surface of an upper end of the concave part 355. The curved coupling part 351 may be formed on an outer surface of the third concave wall part 355c of the concave part 355. The curved coupling part 351 may be formed such that the outer surface of the third concave wall part 355c is curved radially outward as it extends upward.

For example, when the third concave part 355c is formed on the cover cap 300, the curved coupling part 351 of the third concave part 355c may be fittingly engaged with the first curved part 111 of the side wall 110 to form a welding region. For example, the cover cap 300 may be welded to the side wall 110 in an area where the curved coupling part 351 and the first curved part 111 are in surface contact.

For example, an upper surface of the third concave wall part 355c may be positioned lower than the flat part 112 of the side wall, thereby preventing weld beads that may be generated during welding from leaking outward from the battery can 100.

The second concave wall part 355b of the concave part 355 may be positioned axially lower than the body part 310. The second concave wall part 355b may prevent movement of the electrode assembly 200. For example, the second concave wall part 355b may support one side of an upper end portion of the electrode assembly 200.

In one embodiment, the edge part 350 may include a horizontal coupling part 352 extending radially outward from the curved coupling part 351. The horizontal coupling part 352 may be formed at a radially outer end of the edge part 350 and may be disposed to face the flat part 112 of the side wall 110.

During the process of seating the cover cap 300 on the battery can 100, the curved coupling part 351 of the edge part 350 may slide downward along the first curved part 111 of the side wall 110. The cover cap 300 may be restricted from downward movement as the horizontal coupling part 352 contacts the flat part 112 of the side wall 110. The coupling depth of the cover cap 300 with respect to the battery can 100 may be regulated by the horizontal coupling part 352.

The horizontal coupling part 352 may be in surface contact with the flat part 112 of the side wall 110 to form a welding region. For example, the cover cap 300 may be welded to the side wall 110 at the horizontal coupling part 352.

In the secondary battery 1 of the present disclosure, when the cover cap 300 is seated on the side wall 110 of the battery can 100, the curved coupling part 351 of the cover cap 300 may be fittingly engaged with the first curved part 111 of the side wall 110 to achieve central axis alignment, and the horizontal coupling part 352 may be in surface contact with the flat part 112 of the side wall 110 to form a welding region.

In the secondary battery 1 of the present disclosure, during the manufacturing process, an electrolyte may be injected into the battery can 100 together with the electrode assembly 200. Here, the electrolyte serves to enable migration of lithium ions between the second electrode and the first electrode constituting the electrode assembly 200. For example, the electrolyte may be a non-aqueous organic electrolyte that is a mixture of a lithium salt and a high-purity organic solvent. As an example, the electrolyte may also be a polymer or solid electrolyte using a polymer electrolyte.

In one embodiment, the electrolyte may be injected into the battery can 100 through the electrolyte inlet of the cover cap 300 while the cover cap 300 and the battery can 100 are welded together. In the secondary battery 1, after the electrolyte is injected through the electrolyte inlet of the cover cap 300, the electrolyte inlet may be finally sealed with a separate sealing member 360.

However, it is not limited thereto, and the secondary battery 1 may also be sealed by coupling the cover cap 300 while the electrolyte is already injected into the battery can 100 together with the electrode assembly 200.

FIG. 7 is a view schematically illustrating a manufacturing process of the secondary battery 1 according to an embodiment of the present disclosure, FIG. 8 is an enlarged view of Portion B of FIG. 7 illustrating the structure of the battery can 100 depending on the radius of curvature of the first curved part 111 in an embodiment of the present disclosure, FIG. 9 is a photograph showing a state in which a crack has occurred in the first curved part 111 in FIG. 8(a), and FIG. 10 is a flowchart illustrating a method for manufacturing the secondary battery 1 according to an embodiment of the present disclosure.

Referring to FIGS. 7 to 10, the method for manufacturing the secondary battery 1 of the present disclosure may include a first processing step (S910) of processing the side wall 110 defining an internal space of the battery can 100 and a dummy plate extending radially outward from the upper end of the side wall 110.

In FIG. 7(a), a state in which a dummy plate 100B is formed on the battery can 100 through the first processing step (S910) is schematically illustrated, and in Fig. 7(b), a state in which the dummy plate 100B is cut from the battery can 100 through the second processing step (S920) is schematically illustrated.

First, referring to FIG. 7(a), in the first processing step (S910), a metal plate-shaped base material may be processed into the form of the battery can 100 through a deep-drawing method. For example, in the first processing step (S910), a plate-shaped base material is placed on a die (not shown) having a cavity (not shown) formed in the shape of the battery can 100, and a punch (not shown) corresponding to the internal space of the battery can 100 is used to press the base material into the cavity. At this time, a portion of the base material pressed by the punch and pushed into the cavity may form the battery can 100, and a portion placed on the die may form the dummy plate 100B.

In the first processing step (S910), the first curved part 111 may be formed to be curved to have the first radius of curvature R₁ on the inner circumferential surface 110a of the side wall 110. In the first processing step (S910), a tensile force may act on the base material at a boundary region (e.g., see region B of Fig. 7(a)) between a portion (e.g., the battery can 100) pushed into the cavity by the punch and a portion (e.g., the dummy plate, 100B) remaining on the die, thereby causing tensile deformation.

In the present disclosure, in the first processing step (S910), a portion where the battery can 100 and the dummy plate 100B are connected may be deformed by tensile deformation of the base material to be curved to have the first radius of curvature R₁, thereby forming a first curved part 111.

In Fig. 8(a), a comparative example is illustrated in which the radius of curvature (R₀) of the first curved part 111 is formed to be smaller than the thickness of the side wall 110, and in Fig. 8(b), an example according to one embodiment of the present disclosure is illustrated in which the radius of curvature (R1) of the first curved part 111 is formed to be greater than or equal to the thickness of the side wall 110.

Meanwhile, referring to FIG. 8(b), the first radius of curvature R₁ of the first curved part 111 formed in the first processing step (S910) must be formed to be greater than or equal to the thickness of the side wall 110, as described above.

If, as illustrated in FIG. 8(a), the radius of curvature (for example, Ro) of the first curved part 111 is smaller than the thickness of the side wall 110, excessive tensile deformation may occur at the boundary between the portion pushed into the cavity and the portion remaining on the die. In this case, as illustrated in FIG. 9, cracks may occur on the surface of the first curved part 111, as previously described.

Referring again to FIG. 7(b) and FIG. 10, the method for manufacturing the secondary battery 1 of the present disclosure may include a second processing step (S920) of removing the dummy plate 100B from the battery can 100.

In the second processing step (S920), the flat part 112 may be formed by cutting between the side wall 110 of the battery can 100 and the dummy plate 100B extending from the side wall 110 of the battery can 100(e.g., see P of Fig. 7(b)).

For example, in the second processing step (S920), the dummy plate 100B may be removed, and the cut portion may form the flat part 112. In the second processing step (S920), the dummy plate 100B may be cut such that the axial height of the first curved part 111 formed in the first processing step (S910) is greater than or equal to the thickness of the side wall 110.

At this time, the flat part 112 may be formed to extend radially outward from the first curved part 111 formed in the first processing step (S910) in a direction perpendicular to the axial direction.

In addition, the second processing step (S920) may also form the above-described second curved part 113. For example, in the second processing step (S920), the outer circumferential surface 110b of the battery can 100 may be pressed toward the central axis by a cutting member used for removing the dummy plate 100B, thereby forming the second curved part 113.

The method for manufacturing the secondary battery 1 according to an embodiment of the present disclosure may further include a cap coupling step (S930) of coupling the cover cap 300 having the curved coupling part 351 shaped to correspond to the first curved part 111 to the side wall 110 (see, for example, FIG. 5).

In the cap coupling step(S930), the first curved part 111 and the curved coupling part 351 may be fittingly engaged with each other such that the central axis of the cover cap 300 is arranged coaxially with the central axis of the battery can 100, thereby achieving alignment between the cover cap 300 and the battery can 100.

In the secondary battery 1 according to an embodiment of the present disclosure, the curved coupling part 351 of the cover cap 300 may be fittingly engaged with the side wall 110 of the battery can 100 having the first curved part 111, thereby ensuring central axis alignment between the battery can 100 and the cover cap 300.

In the present disclosure, the first radius of curvature R₁ of the first curved part 111 of the side wall 110 is formed to be greater than or equal to the thickness of the side wall 110, thereby preventing a crack that may occur on the surface of the first curved part 111 during formation of the first curved part 111 on the side wall 110 using a deep-drawing method.

In the present disclosure, a separate alignment process for ensuring alignment of the cover cap 300 is unnecessary during welding of the cover cap 300 to the battery can 100, thereby enabling improvement in manufacturing process efficiency.

In the present disclosure, once central-axis alignment between the cover cap 300 and the battery can 100 is achieved, the flat coupling part 352 of the cover cap 300 is seated on the flat part 112 of the side wall 110 to form a welding region, thereby enabling uniform welding at an accurate welding region.

In the above, although the embodiments of the present disclosure have been described with all components coupled in one or operating in combination, the present disclosure is not necessarily limited to such embodiments. Within the scope of the purpose of the present disclosure, all components may be selectively coupled in one or more forms and operate accordingly. Unless otherwise defined, all terms including technical or scientific terms have the same meanings as commonly understood by those skilled in the art to which the present disclosure pertains. Commonly used terms, such as those defined in dictionaries, should be interpreted in accordance with their contextual meanings in the relevant technical field, and unless explicitly defined in the present disclosure, shall not be interpreted in an idealized or unduly formal sense.

The above description is merely illustrative of the technical spirit of the present disclosure, and it will be appreciated by those skilled in the art to which the present disclosure pertains that various modifications and variations can be made without departing from the essential characteristics of the present disclosure. Therefore, the embodiments disclosed herein are intended to describe, not to limit, the technical spirit of the present disclosure, and the scope of the technical spirit is not limited to these embodiments. The scope of protection of the present disclosure shall be defined by the following claims, and all technical spirits that fall within the equivalent scope shall be construed as being included within the scope of the present disclosure.

## Claims

1. A secondary battery comprising:
a battery can comprising a first curved part formed to be curved to have a first radius of curvature on an inner circumferential surface of a side wall;
an electrode assembly accommodated inside the battery can; and
a cover cap coupled to the side wall,
wherein the cover cap comprises a curved coupling part having a shape corresponding to at least a portion of the first curved part.

2. The secondary battery according to claim 1, wherein an upper surface of the side wall comprises a flat part extending radially outward from the first curved part in a direction perpendicular to an axial direction.

3. The secondary battery according to claim 1 or 2, wherein the first radius of curvature of the first curved part is formed to be greater than or equal to a thickness of the side wall.

4. The secondary battery according to any one of claims 1 to 3, wherein an axial height of the first curved part is formed to be greater than or equal to a thickness of the side wall.

5. The secondary battery according to any one of claims 1 to 4, wherein the first curved part is formed to be convexly curved radially inward.

6. The secondary battery according to claim 2, wherein the cover cap comprises a body part having a plate shape and an edge part disposed along a circumference of the body part and coupled to the side wall, and
wherein the curved coupling part is formed on one side of the edge part.

7. The secondary battery according to claim 6, wherein the edge part comprises a horizontal coupling part extending radially outward from the curved coupling part so as to face the flat part.

8. The secondary battery according to claim 6 or 7, wherein the edge part comprises a concave part formed to be concave axially downward from the body part, and the curved coupling part is formed on an outer surface of the concave part.

9. The secondary battery according to any one of claims 6 to 8, wherein at least a partial section of the body part is formed to be concave axially downward relative to the edge part so as to be directly connected to the electrode assembly.

10. The secondary battery according to any one of claims 6 to 9, wherein at least a partial section of the body part is formed to be convex axially upward relative to the edge part.

11. A method for manufacturing a secondary battery comprising:
a first processing step of processing a side wall defining an internal space of a battery can and a dummy plate extending radially outward from an upper end portion of the side wall; and
a second processing step of removing the dummy plate from the battery can,
wherein, in the first processing step, a first curved part is formed to be curved to have a first radius of curvature on an inner circumferential surface of the side wall.

12. The method for manufacturing a secondary battery according to claim 11, wherein, in the second processing step, a flat part is formed to extend radially outward from the first curved part in a direction perpendicular to an axial direction.

13. The method for manufacturing a secondary battery according to claim 11 or 12, further comprising a cap coupling step of coupling a cover cap comprising a curved coupling part having a shape corresponding to the first curved part to the side wall,
wherein, in the cap coupling step, the first curved part and the curved coupling part are fittingly engaged with each other such that a central axis of the cover cap is arranged coaxially with a central axis of the battery can.

14. The method for manufacturing a secondary battery according to claim 12 or 13, wherein the first radius of curvature of the first curved part is formed to be greater than or equal to a thickness of the side wall.

15. The method for manufacturing a secondary battery according to any one of claims 12 to 14, wherein an axial height of the first curved part is formed to be greater than or equal to a thickness of the side wall.
